# EUROPEAN PATENT APPLICATION

(11) **EP 2 873 855 A1**
(43) Date of publication of application: **20.05.2015**
(21) Application number: 13817420.6
(22) Date of filing: 09.07.2013
(51) Int. Cl.: F03D 11/00, F16H 57/04

(54) **METHOD AND DEVICE FOR PREVENTING EXCESSIVE WASTE IN GEAR ASSEMBLIES**

(30) Priority: 10.07.2012 ES 201231081
(71) Applicant: Universitat Politècnica De Catalunya, 08034 Barcelona (ES)
(72) Inventor: CASALS TERRÉ, Jasmina, E-08034 Barcelona (ES); FARRÈ LLADÓS, Josep, E-08034 Barcelona (ES)
(74) Representative: Juncosa Miro, Jaime
(86) International application number: PCT/ES2013/070494
(87) International publication number: WO 2014/009588

(57) **Abstract**

METHOD AND DEVICE FOR PREVENTING EXCESSIVE WEAR IN GEARS, involving lubricating the contact point between the wheels (1) of a gear (2), injecting lubricant into said point via parts (3) housed in the notches (4) that determine the spaces between teeth (5), via a system of channels with a lateral opening provided in said parts (3). The width (a) and thickness (b) of the parts (3) coincide respectively with the width of the bottom of the valley of the notch (4) and with the space between the surface of the crest (7) of the engaging tooth (5) and that of the valley of the notch (4) which houses it. The parts (3) have through-holes (8) connected to longitudinal channels (9) that, at one of the ends thereof, meet in a laterally open notch (10). The same system that lubricates the rest of the gear assembly is used to inject the lubricant.

## Description

### OBJECT OF THE INVENTION

As stated in the title of the present specification, the invention relates to a method and a device to prevent excessive wear in gears.

More particularly, the object of the invention is a method and a device for its implementation, which aims to improve gear performance and prevent excessive wear present in machinery gears working under heavy loads, particularly intended to be applied in wind turbines gears, where the method is based on the application of micro-fluidic technology comprising the development of a grease distribution system through parts of soft material (for example polymers) which are arranged in the contact point between the teeth and the notches of the gear.

### FIELD OF THE INVENTION

The application field of the present invention falls within the field of industry devoted to the manufacture of wind turbines, focusing on the field of systems intended to improve gears wear.

### BACKGROUND OF THE INVENTION

To design more efficient wind turbines, the current trend of manufacturers is to increase the rotor diameter so that it can capture more wind kinetic energy and thus increase power and generate more energy. Thereby profits are achieved faster. The load increases in components and connections due to the increase in the size of the entire rotor, and consequently there is also an increase of the deformations present in all the materials forming the parts of the wind turbine. The present static loads increase significantly bringing back a problem that was not evident in previous models of wind turbines with smaller power.

Most systems that make up the wind turbine are assembled in a static manner, not the powertrain system that transmits torque to the yaw and the variable change of pitch systems.

During dynamic operation of wind turbines, the bearings of the variable change of pitch system are subjected to alternating traction and compression stress.

Similarly, the yaw system is affected by the same stress cycle, but in this case due to the different wind speed and the small wind direction changes.

In each of these cycles a gear micro-movement is produced that removes the lubricant and initiates a friction between the two surfaces in contact of the teeth that are working. Contact between the metal produced by the absence of lubricant leads to excessive wear on the gear.

Reliability studies such as those by Ribrant in 2005 [10] show that the ratio of failure of wind turbines is due in a 13.4% to the pitch system and in a 6.7% to the yaw system. So, we could say that about 20% of failures in wind turbines could be related to that excessive wear and that this failure rate may be increasing, if the same lubrication system and power transmission is maintained, and the wind turbines power is increased.

20% of failure ratio is significant enough to motivate most wind turbine manufacturers to have begun to study the excessive wear of the teeth set having a higher working load caused in the friction region, both in the yaw system and in the variable change of pitch system, and its possible solution.

Kürzdörfer M; 2007 [8] from Baier & Koppel company was the first to patent a system to reduce tooth wear. On their website [11] the different systems developed for this purpose can be seen. The first patented invention was based on a lubrication system that point injects lubricant through the upper part of the tooth in the position of wear.

Following examples can be found in patents such as Dimascio, P et al; 2009 [4] that proposes to replace the damaged region of the bearing crown with a removable part attached by bolts.

Mashue, A; 2011 [2] proposes a marks system to measure the excessive tooth wear and thus predict the repair before failure occurs.

Takadoum J; 2008 [5] published the parameters of the operating conditions to optimize to minimize wear in gears: working surface, loads acting, mechanical contact and tribology of the system.

Mashue, A; 2011 [1] patented new conditions not used until then consisting to increase the hardness of the bearing crown to become higher than the hardness of the pinion (design concept inherited from the worm pinion gears design) thus causing the wear in the pinion that due to its size it is easier to replace.

Klaus P; 2010 [3] proposed a change in the tribology of the system, as it added to the crown of the bearing or of the pinion holes that inject fresh lubricant at the contact point of the teeth.

Nielsen, T; 2008 [6] proposed a change that involves joining two pinions to transmit the same torque and thus reduce the pressure suffered by each of the pinions at the contact surface.

In general all of the aforementioned patents are aimed to improve the excessive wear modifying those parameters described by Takadoum J; 2008 [5]. Klaus P; 2010 [3] modifies the lubrication system involving complex machining, Nielsen, T; 2008 [6] modifies the mechanical contact by adding new parts, Mashue, A; 2011 [1] modifies the conditions of the working surface having to replace parts for wear. Thus production is complicated obtaining expensive applications which are difficult to implement in wind turbines in operation.
[1] Mashue A, Moorer B.G, Goodwin K, inventors; 2011 Jun. 16. Gear set for pitching blade of rotor of wind turbine utilized for providing electricity to utility grid, has pinion/drive gear comprising set of teeth whose hardness is less than harness of teeth of ring gear. US 2011142617-A1
[2] Mashue A, Pemrick J, inventors; 2011 Jun. 16. Wind turbine with gear indicating wear. US 2011138951-A1
[3] Klaus P, inventor; 2010 Apr 20. Actuator for adjusting a rotor blade pitch angle. United States patent US 7699584-B2.
[4] Dimascio P, Close R, Auer G, Grimley R, Hamel A, inventors; 2009 Aug. 29. Hub pitch gear repair method. CA 2655691-A1.
[5] Takadoum, Jamal; 2008. Materials and Surface Engineering in Tribology. London: Wiley.
[6] Nielsen T, inventor; 2008 Jun. 26. A gear system for yaw drive or a pitch drive for a wind turbine. WO 2008/074320-A1.
[8] Kürzdörfer, M inventor; 2007 Mar. 21. Anstellwinkeleinstellvorrichtung für eine Windkraftanlage. EP 1764544-A2.
[10]Ribrant, Johan; 2005-2006. Reliability performance and maintenance - A survey of failures in wind power systems. Master thesis. Sweden. KTH School of Electrical Engineering.
[11]Baier & köppel Product Specifications, Available at: www.beka-lube.de, 2012-05-07.

### SUMMARY OF THE INVENTION

In the present invention a new lubrication system for lubricating the contact point between the two gears that provides the possibility to exactly lubricate the contact area with a control of the amount of grease required, which, moreover, is compatible with both the new wind turbine models and also the currently ongoing wind turbine models in which it allows lubrication of the contact tooth (5) simultaneously with the generation of electricity, thus avoiding generation losses.

Particularly, the method proposed by the present invention is based on the application of the micro-fluidic technology and thus the micro manufacturing of a grease distribution system that can be adapted to the dedendum of the gear to be lubricated.

For this end it is incorporated a micro-manufactured part with dimensions in accordance to the design geometry of the gear, so in each case the part will be designed to be adapted to the assembly.

In any case, said part consists of a strip adapted to fit to the gap of the dedendum or tooth root, considering, of course, the incorporation of one of these parts in each of the dedendum determining two ridges or teeth in, at least, those teeth that suffer excessive wear.

The lubricant distribution strips are preferably made of soft materials (such as polymer) to avoid damage to the gear in case of accidental contact.

These strips also are provided, each with a plurality of perforations which are lubricant distribution micro-fluidic channels.

If we use design values of module 12 and 15 pinion teeth, similar to those used in Pitch and Yaw gears in wind turbines, we obtain values of width and thickness for the part of 13.4mm and 3mm respectively, values easy to manufacture using micro-technology.

Once the strips in a gear, the lubricant injection through the same will be carried out by integrating them to the own automatic lubrication system usually available in the gears, especially in those of the type to which the invention is primarily intended, that those of wind turbines.

An example of that integration to said lubrication system consists in connecting the grease pump to a distributor with the corresponding return piping to supply the bearing rolling elements, the toothed crown and to supply the strip for lubrication the wear point. To control the action of lubrication in that point, a control valve is provided that can be driven mechanically by the engine itself or by the control of the wind turbine when the latter is located in the working position.

Having regard to the above, it is stated that the here described method and device to prevent excessive wear on gears is an innovation of features previously unknown for this purpose, reasons which together to its practical usefulness, provide a sufficient basis for obtaining the requested exclusivity privilege.

### DRAWINGS DESCRIPTION

To complement the description that is being made of the invention, and to assist a better understanding of the distinguishing features, to the present specification, as an integral part thereof, a set of drawings are attached, which, in an illustrative an non limiting manner, represent the following:
Figure number 1.- Shows a perspective view of two meshed gear wheels, to which is incorporated the device according to the invention.
Figure number 2.- Shows a sectional view and in detail of the engagement between the tooth of a wheel with the notch of the other, showing the configuration and arrangement of the strip which forms the device of the invention housed in the dedendum of said notch.
Figures numbers 3, 4 and 5.- Show two views of an embodiment of the strip comprised by the device of the invention, shown, respectively, by means of a top plan view, a bottom plan view and a side elevation view.
Figure number 6.- Shows a diagram of the circuit for lubricating a gear to which the device of the invention has been incorporated.

### PREFERRED EMBODIMENT OF THE INVENTION

In view of the mentioned figures, and according to the adopted numbering, a preferred embodiment of the invention is shown, which comprises the parts and elements that are described in detail below.

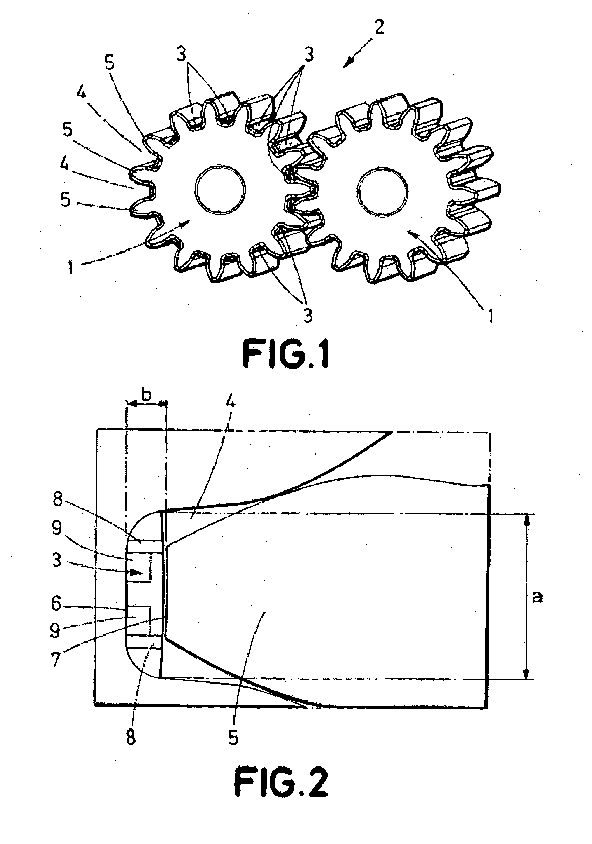

Thus, the method of the invention comprises the lubrication of the contact point between the two wheels (1) of a gear (2) by microfluidics technique, to which end, as seen in Figure 1, in at least one of said two wheels (1) is provided the incorporation of a microfabrication part (3) housed in each of the notches (4) determining the spaces between the teeth (5) of said wheel (1), where said part (3) is a part having a planar and approximately rectangular configuration and which fits snugly to the dedendum (6) of each of said notches (4).

Is important to point that the adjustment of each of the parts (3) on the dedendum space (6) of each notch (4) is achieved in each case by dimensioning the part so that the width (a) of the same matches the width of the dedendum (6) in which is housed, and so that the thickness (b) thereof be less or equal than the space between the surface of the crest (7) of the tooth (5) of the engaging wheel and the surface of the dedendum (6) into which the part (3) is housed.

Each of said parts (3) is also provided with means for channeling lubricant in the area in which they are incorporated, preferably but not limited to, using the own lubrication system of the gear assembly (2).

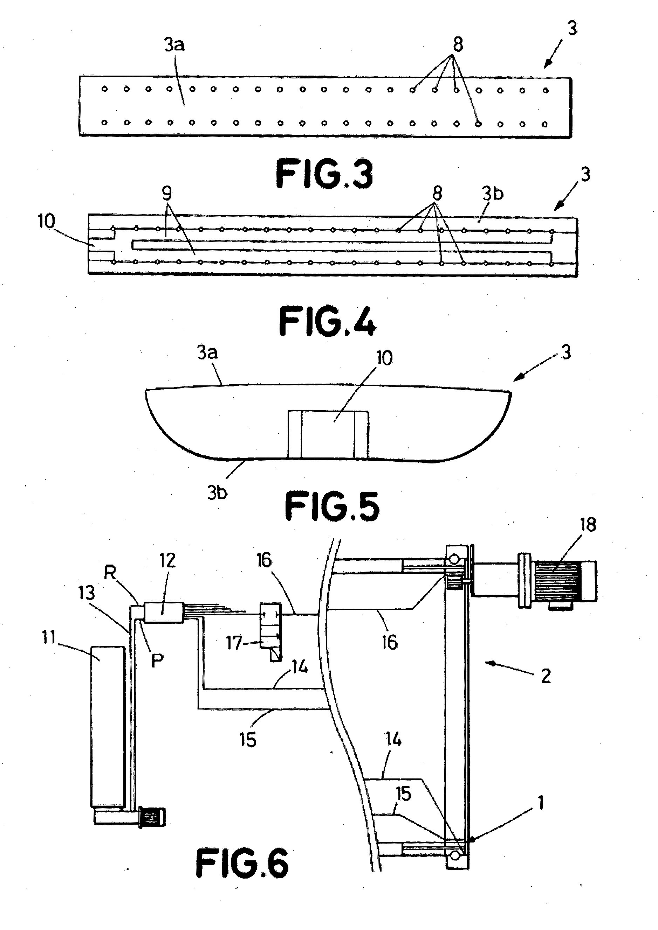

To this end, each of said parts (3), as shown in Figures 3 to 5, has a plurality of through holes (8) passing through the part from its top surface (3a) to its bottom surface (3b), being, at said bottom surface, connected with longitudinal grooves (9) that in one end of the part (3) converge into a notch (10) open laterally, so that, together, constitute a system of distribution channels for the lubricant, where the latter will be injected into the longitudinal grooves (9) through said lateral opening forming said notch (10).

Thus, since the dimensions of the notches of the space of the dedendum (6) are variable depending on the module of the gear and on the gear geometry, in each case the design of the strip is adapted both in dimensions, width (a) and thickness (b), as in the lubricant distribution system.

Turning to Figure 6, it shows the scheme of operation of the device that, once the parts (3) are assembled, uses for its lubrication the same lubrication system that lubricates the rest of the gear, where the grease pump (11) is shown connected to a distributor (12) with the corresponding return pipe (13), existing a first feed tube (14) supplying grease to the rolling elements of the bearing of the gear (2), a second feed tube (15) grease feeding one of the wheels (1), specifically the toothed crown, and a third feed tube (16) which feeds via the side notches (10) the parts (3) of the device lubricating exactly the wear point. Furthermore, to control the action of the lubrication of said point, in said third feed tube (16) a control valve (17) is arranged which can be mechanically driven by the engine (18) itself or by the control of the wind turbine when located at the working position.

Thus, the device described can be applied to any type of machine, but advantageously, in wind turbines in the change of pitch gear and in the yaw gear.

The device allows an independent supply of lubricant to each gear of the system, enabling lubricate the tooth (5) in contact while supporting loads.

The width (a) and thickness (b) of the strips can be adapted to the geometric characteristics of any gear to allow its mounting thereon, and also the geometry and positions of the holes that constitute the lubricant distribution channels system of the strips are also variable.

Sufficiently described the nature of the present invention, as well as how to put it in practice, it is not considered necessary to further explain the invention to allow any person skilled in the art understand its scope and the advantages derived therefrom, stating that, in its essence, the invention can be put in practice in other embodiments that differ in detail from that indicated by way of example, and which are also covered by the protection claimed provided they do not alter, change or modify its fundamental principle.

## Claims

1. METHOD TO PREVENT EXCESSIVE WEAR IN GEARS of the type that includes an injection of lubricant to a contact point between two wheels (1) of a gear (2), **characterized in that** said injection of lubricant to said contact point is performed through parts (3) housed in at least one of the notches (4) determining the spaces between teeth(5) of one of said wheels (1), wherein said lubricant is injected into said parts (3) via a channels system with lateral opening provided in said parts (3) for this purpose.

2. METHOD TO PREVENT EXCESSIVE WEAR IN GEARS, according to claim 1, **characterized in that** the injection is performed using the same system that lubricates the rest of the gear, including therein a third feed tube (16) which adds to those already provided normally.

3. METHOD TO PREVENT EXCESSIVE WEAR GEARS according to claim 2, **characterized in that** for controlling the action of lubricating of the wheels contact points a control valve (17) is arranged in said third feed tube (16), which can be mechanically driven by an engine (18) or by a wind turbine control.

4. DEVICE TO PREVENT EXCESSIVE WEAR IN GEARS, according to the method described in any of claims 1-3 **characterized in that** it comprises parts (3) having a planar and approximately rectangular configuration, which snugly fit the dedendum (6) of each of the notches (4) of the wheel (1) that incorporates them; and **in that** said parts (3) have a system of distribution channels for lubricant.

5. DEVICE TO PREVENT EXCESSIVE WEAR IN GEARS according to claim 4, **characterized in that** the width (a) and thickness (b) of the parts (3) is variable and adapts in each case, respectively, to the width of the dedendum (6) in which is housed and to the space between the surface of the crest (7) of the tooth (5) of the engaging wheel and the surface of the dedendum (6) in which the part (3) is housed.

6. DEVICE TO PREVENT EXCESSIVE WEAR IN GEARS, according to claim 4 or 5, **characterized in that** the lubricant distribution channels system is variable in number according to the geometry of the gear adapted to the position of the dedendum of the gear tooth.

7. DEVICE TO PREVENT EXCESSIVE WEAR IN GEARS, according to claim 6, **characterized in that** the lubricant distribution channels system comprises a plurality of through holes (8) connected, at the lower surface of the part, with longitudinal grooves (9) that in one of the ends of the part (3) converge into a notch (10) open laterally.

8. DEVICE TO PREVENT EXCESSIVE WEAR IN GEARS, according to any of claims 4-7, **characterized in that** the parts (3) are of soft material, preferably polymer.
